# EUROPÄISCHE PATENTANMELDUNG

(11) **EP 1 257 031 A1**
(43) Veröffentlichungstag der Anmeldung: **13.11.2002**
(21) Anmeldenummer: 01109731.8
(22) Anmeldetag: 20.04.2001
(51) Int. Cl.: H02G 3/18, H02G 3/38

(54) **Vorrichtung zum Befestigen eines Gehäuses auf einer mit Bodenplatten abgedeckten Tragkonstruktion**

(71) Anmelder: Rittal GmbH & Co. KG, 35745 Herborn (DE)
(72) Erfinder: Woodward, Michael, Looe, Cornwall PL 132HX (GB); Keens, Gery, Roborough, Plymouth PL6 6AU (GB)
(74) Vertreter: Fleck, Hermann-Josef, Dr.-Ing.

(57) **Zusammenfassung**

Die Erfindung betrifft eine Vorrichtung zum Befestigen eines Gehäuses mit einer Boden-Kabeleinführöffnung auf einer auf einem Raumboden angeordneten Tragkonstruktion für im Raster verlegbare Bodenplatten, wobei die Tragkonstruktion im Raster der Bodenplatten aufgestellte Vertikalträger aufweist, die mittels Tragleisten als Auflagen für die Ränder der Bodenplatten miteinander verbunden sind. Ein Befestigungsrahmen und speziell ausgebildeten Rahmenschenkel verbindet den Boden des Gehäuses mit der Tragkonstruktion.

## Beschreibung

Die Erfindung betrifft eine Vorrichtung zum Befestigen eines Gehäuses mit einer Boden-Kabeleinführöffnung auf einer auf einem Raumboden angeordneten Tragkonstruktion für im Raster verlegbare Bodenplatten, wobei die Tragkonstruktion im Raster der Bodenplatten aufgestellte Vertikalträger aufweist, die mittels Tragleisten als Auflagen für die Ränder der Bodenplatten miteinander verbunden sind.

Derartige Tragkonstruktionen mit Bodenplatten werden bevorzugt in Computerräumen eingesetzt, da sie eine einfache Verlegung und Führung der Anschlussund Verbindungskabel für die aufgestellten Gehäuse zulassen. Dabei ergeben sich allerdings Befestigungsschwierigkeiten, wenn die Gehäuse eine Standfläche aufweisen, die nicht dem Rastermaß der Tragkonstruktion, d.h. auch dem Außenmaß der Bodenplatten entsprechen. Ruht das Gehäuse auf der Tragkonstruktion, dann ergeben sich um das Gehäuse Leerstellen, die mit auf das erforderliche Maß geschnittenen Bodenplatten abgedeckt werden müssen.

Es ist Aufgabe der Erfindung, eine Vorrichtung der eingangs erwähnten Art zu schaffen, mit der Gehäuse, die nicht dem Rastermaß der Bodenkonstruktion entsprechen, fest mit der Tragkonstruktion verbunden werden können und die Kabeleinführung in das Gehäuse dadurch nicht beeinträchtigt wird.

Diese Aufgabe wird nach der Erfindung dadurch gelöst, dass sie als Befestigungsrahmen ausgebildet ist, dessen Rahmenschenkel vertikale Tragschenkel aufweisen, die der Tragkonstruktion zugekehrt in nach innen gerichtete Stützflansche übergehen, dass zumindest die Tragschenkel von zwei einander gegenüberliegenden Rahmenschenkel mit ihrem Außenabstand auf das Raster der Tragkonstruktion abgestimmt ist, dass die Stützflansche auf freigelegten Teilen der Vertikalträger und freigelegten Tragleisten abstützen und mit diesen verbindbar sind und dass die Tragschenkel der Rahmenschenkel der Tragkonstruktion abgekehrt im Abstand zu den Bodenplatten in horizontale Befestigungsflansche übergehen, auf denen das Gehäuse aufgesetzt und mit diesem verbindbar ist.

Bei dieser Ausgestaltung des Befestigungsrahmens passt dieser in den durch Abnahme von Bodenplatten geschaffenen Freiraum, so dass sich die Stützflansche auf freigelegten Teilen von Vertikalstützen und freigelegten Tragleisten bzw. Teilen davon abstützen und mit diesen fest verbunden werden können. Die angrenzenden Bodenplatten decken den Raum um das Gehäuse ab. Der Befestigungsrahmen übergreift mit dem Befestigungsflansch im Abstand die angrenzenden Bodenplatten und ist zumindest in einer Richtung auf das Raster der Bodenplatten und das Maß des Gehäuses abgestimmt. Das Gehäuse wird mit dem Befestigungsflansch des Befestigungsrahmens verbunden. Die Kabeleinführung in das so mit der Tragkonstruktion fest verbundene Gehäuse erfolgt über den nicht mit Bodenplatten belegten Freiraum und die Kabeleinführöffnung im Boden des Gehäuses.

Ist nach einer Ausgestaltung vorgesehen, dass die Länge der einander gegenüberliegenden Rahmenschenkel mit ihren Befestigungsflanschen auf die Breite des Gehäuses und die Länge der senkrecht dazu verlaufenden Rahmenschenkel mit ihren Befestigungsflanschen auf die Tiefe des Gehäuses abgestimmt ist, dann kann der Befestigungsrahmen das Gehäuse großflächig tragen. Das Einsetzen des Befestigungsrahmens in einen Freiraum ist dadurch leicht möglich, dass die Befestigungsflansche der einander gegenüberliegenden Rahmenschenkel am Tragschenkel nach außen abgekantet sind, während die Befestigungsflansche der senkrecht dazu verlaufenden Rahmenschenkel am Tragschenkel nach innen abgekantet sind.

Bei kleindimensionierten Gehäusen, die in der Tiefe etwa dem Maß der Bodenplatten entsprechen, empfiehlt sich eine Ausgestaltung, die dadurch gekennzeichnet ist, dass der Befestigungsrahmen in einen Freiraum, der durch Abnahme von zwei benachbarten Bodenplatten geschaffen ist, einsetzbar ist, wobei die Stützflansche von drei Rahmenschenkel sich auf den mit halber Breite freigelegten Tragleisten abstützen und die Tragschenkel dieser Rahmenschenkel an angrenzenden Bodenplatten angrenzen.

Eine Ausgestaltung für den Befestigungsrahmen ist dadurch gekennzeichnet, dass die Rahmenschenkel der einander gegenüber liegenden Seiten des Befestigungsrahmens im Wesentlichen Z-förmig sind, währen die Rahmenschenkel der senkrecht dazu verlaufenden Seiten des Befestigungsrahmens im Wesentlichen U-förmig ausgebildet sind.

Für die Stabilität des Befestigungsrahmens ist eine Ausgestaltung von Vorteil, die dadurch gekennzeichnet ist, dass die freien Kanten der Stützflansche und der Befestigungsflansche mittels abgekanteter Ränder versteift sind.

Die Erfindung wird anhand eines in den Zeichnungen dargestellten Ausführungsbeispiels näher erläutert. Es zeigen:
- Fig. 1: eine Draufsicht auf den in einen Freiraum der Bodenkonstruktion eingesetzten Befestigungsrahmen,
- Fig. 2: im Vertikalschnitt entlang der Linie II-II der Fig. 1 die auf einem Gebäudeboden angeordnete Tragkonstruktion für Bodenplatten mit einem mittels Befestigungsrahmen darauf fest verbundenen Gehäuse und
- Fig. 3: einen Vertikalschnitt entlang der Linie III-III der Fig. 1.

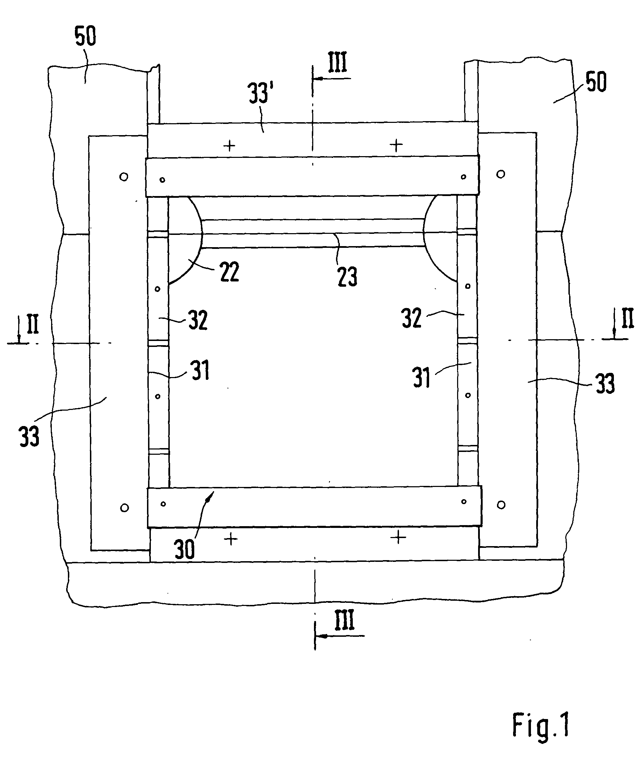

Wie die Fig. 1 erkennen lässt, stehen auf einem Raumboden 10 in vorgegebenem Raster Vertikalträger 21 in Reihen und Spalten. Das Raster ist durch die Außenabmessungen von Bodenplatten 50 bestimmt, die mit Vorteil quadratisch sind. Die Vertikalträger 21 stehen mit Fußteilen 22 auf dem Raumboden 10 und schließen mit Auflageteilen 25 die Tragkonstruktion 20 als Eckauflage für die Bodenplatten 50 oben ab. Horizontale Tragleisten 23 verbinden gitterartig die Auflageteile 25 der Vertikalträger 21. Die Tragkonstruktion 20 trennt mit den Bodenplatten 50 zum Raumboden 10 hin einen unterteilten Hohlraum ab, in dem auf einfache Weise Kabel geführt werden können. Dies wird durch das abnehmbare Auflegen der Bodenplatten 50 auf der Tragkonstruktion 20 begünstigt. Die Vertikalträger 21 können auch mit dem Raumboden 10 verbunden sein und für die Verbindung der Tragleisten 23 an den Auflageteile 25 der Vertikalträger 21 gibt es verschiedene Möglichkeiten, um die Tragkonstruktion 20 ausreichend stabil und belastbar zu machen.

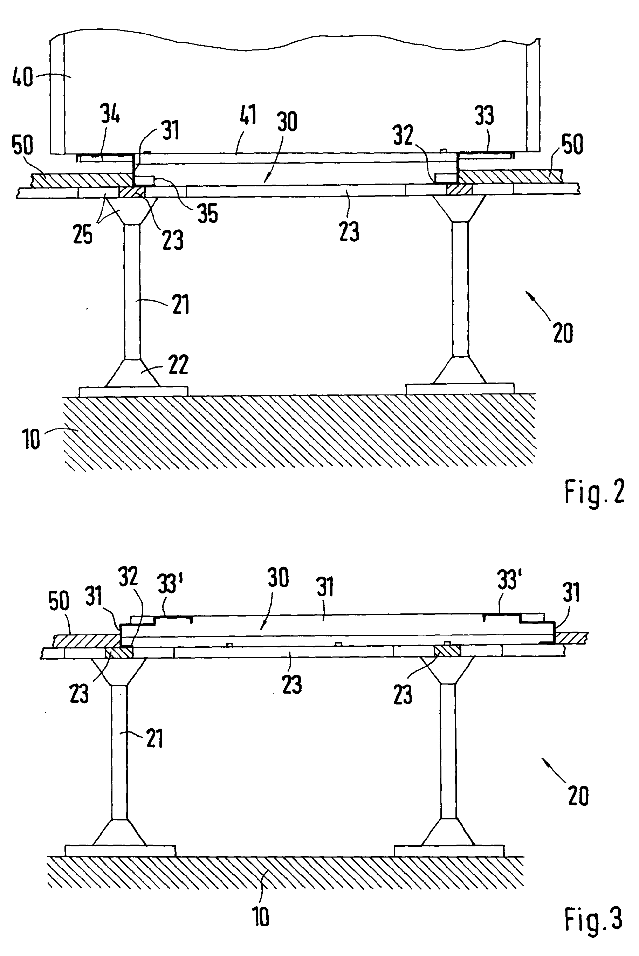

Nimmt man eine Bodenplatte 50 ab, dann können Kabel die Bodenkonstruktion über dem Raumboden 10 passieren und über eine Kabeleinführöffnung 41 im Boden eines aufgesetzten Gehäuses 40 in dieses eingeführt werden. Für die Befestigung des Gehäuses 40 mit der Tragkonstruktion 20 wird ein Befestigungsrahmen 30 verwendet, dessen eine Rahmenschenkel im Wesentlichen Z-förmig und dessen senkrecht dazu stehende Rahmenschenkel im Wesentlichen U-förmig sind, wie die Schnitte nach Fig 2 und 3 zeigen. Dabei weist der Befestigungsrahmen 30 einen vertikalen Tragschenkel 31 auf, dessen Außenkontur an den durch die Abnahme einer oder mehrere, nebeneinander angeordneter Bodenplatten 50 geschaffenen Freiraum in der Abdeckung der Tragkonstruktion 20 angepasst ist. Die der Tragkonstruktion 20 zugekehrte Unterkante des Tragschenkels 31 ist als Stützflansch 32 nach innen abgekantet, so dass der Befestigungsrahmen 30 sich auf den freiliegenden Teilen der Auflageteile 25 und der Tragleisten 23 abstützen kann, wie der Fig. 2 deutlich zu entnehmen ist. Die der Tragkonstruktion 20 abgekehrte Oberkante des Tragschenkels 31 ist als Befestigungsflansch 33 nach außen abgekantet. Das Gehäuse 40 steht auf dem Befestigungsflansch 33 auf und ist mit diesem fest verbindbar. Die Stützflansche 32 können auch mit den Tragleisten 23 der Tragkonstruktionen 20 fest verbunden werden. Der Befestigungsflansch 33 ist wie der Stützflansch 32 an allen vier Rahmenseiten abgekantet, die als getrennte Rahmenschenkel gefertigt und zum Befestigungsrahmen 30 miteinander verbunden sind. Der Befestigungsflansch 33 erstreckt sich in kleinem Abstand über die an den Freiraum angrenzenden Bodenplatten 50 und ist auf die Tiefe des Gehäuses 40 abgestimmt, das fest mit dem Befestigungsflansch 33 verbunden wird. Die Z-förmigen Rahmenschenkel einander gegenüberliegender Seiten des Befestigungsrahmens 30 erstrecken sich über eine Bodenplatte 50 hinaus, so dass nur der linke Rahmenschenkel nach Fig. 3 mit der Tragkonstruktion 20 abgestützt und verbunden werden kann. Die U-förmigen Rahmenschenkel mit den nach innen gerichteten Befestigungsflanschen 33' sind auf den Freiraum, d.h. das Raster der Bodenplatten 50 und die entsprechende Tiefe des Gehäuses 40 angepasst.

Wie in Fig. 3 angedeutet ist, kann eine geschnittene Bodenplatte außerhalb des Befestigungsrahmens 30 auch die Bodenkonstruktion um das Gehäuse 40 abdecken.

Die freien Kanten der Stützflansche 32 und der Befestigungsflansche 33 und 33' können mittel abgekanteter Ränder 34 und 35 versteift werden, so dass der Befestigungsrahmen 30 eine ausreichende Stabilität erhält.

## Patentansprüche

1. Vorrichtung zum Befestigen eines Gehäuses mit einer Boden-Kabeleinführöffnung auf einer auf einem Raumboden angeordneten Tragkonstruktion für im Raster verlegbare Bodenplatten, wobei die Tragkonstruktion im Raster der Bodenplatten aufgestellte Vertikalträger aufweist, die mittels Tragleisten als Auflagen für die Ränder der Bodenplatten miteinander verbunden sind,
**dadurch gekennzeichnet,**
**dass** sie als Befestigungsrahmen (30) ausgebildet ist, dessen Rahmenschenkel vertikale Tragschenkel (31) aufweisen, die der Tragkonstruktion (20) zugekehrt in nach innen gerichtete Stützflansche (32) übergehen,
**dass** zumindest die Tragschenkel (31) von zwei einander gegenüberliegenden Rahmenschenkel mit ihrem Außenabstand auf das Raster der Tragkonstruktion (20) abgestimmt ist,
**dass** die Stützflansche (32) auf freigelegten Teilen der Vertikalträger (21) und freigelegten Tragleisten (23) abstützen und mit diesen verbindbar sind und
**dass** die Tragschenkel (31) der Rahmenschenkel der Tragkonstruktion (20) abgekehrt im Abstand zu den Bodenplatten (50) in horizontale Befestigungsflansche (33,33') übergehen, auf denen das Gehäuse (40) aufgesetzt und mit diesem verbindbar ist.

2. Vorrichtung nach Anspruch 1,
**dadurch gekennzeichnet,**
**dass** die Länge der einander gegenüberliegenden Rahmenschenkel mit ihren Befestigungsflanschen (33) auf die Breite des Gehäuses (40) und die Länge der senkrecht dazu verlaufenden Rahmenschenkel mit ihren Befestigungsflanschen (33') auf die Tiefe des Gehäuses (40) abgestimmt ist.

3. Vorrichtung nach Anspruch 1 oder 2,
**dadurch gekennzeichnet,**
**dass** die Befestigungsflansche (33) der einander gegenüberliegenden Rahmenschenkel am Tragschenkel (31) nach außen abgekantet sind, während die Befestigungsflansche (33') der senkrecht dazu verlaufenden Rahmenschenkel am Tragschenkel (31) nach innen abgekantet sind.

4. Vorrichtung nach einem der Ansprüche 1 bis 3,
**dadurch gekennzeichnet,**
**dass** der Befestigungsrahmen (30) in einen Freiraum, der durch Abnahme von zwei benachbarten Bodenplatten (50) geschaffen ist, einsetzbar ist, wobei die Stützflansche (32) von drei Rahmenschenkel sich auf den mit halber Breite freigelegten Tragleisten (23) abstützen und die Tragschenkel (31) dieser Rahmenschenkel an angrenzenden Bodenplatten (50) angrenzen.

5. Vorrichtung nach einem der Ansprüche 1 bis 4,
**dadurch gekennzeichnet,**
**dass** die Rahmenschenkel der einander gegenüber liegenden Seiten des Befestigungsrahmens (30) im Wesentlichen Z-förmig sind, während die Rahmenschenkel der senkrecht dazu verlaufenden Seiten des Befestigungsrahmens (30) im Wesentlichen U-förmig ausgebildet sind.

6. Vorrichtung nach einem der Ansprüche 1 bis 5,
**dadurch gekennzeichnet,**
**dass** die freien Kanten der Stützflansche (32) und der Befestigungsflansche (33, 33') mittels abgekanteter Ränder (34,35) versteift sind.
